# EUROPEAN PATENT APPLICATION

(11) **EP 1 351 525 A2**
(43) Date of publication of application: **08.10.2003**
(21) Application number: 03252125.4
(22) Date of filing: 03.04.2003
(51) Int. Cl.: H04N 9/73

(54) **Real-time gradation control**

(30) Priority: 05.04.2002 GB 0207920
(71) Applicant: Quantel Limited, Newbury, Berkshire RG14 2NX (GB)
(72) Inventor: Throup, David, Lockeridge, Wiltshire SN8 4ED (GB); Johnson, Michael David, Caversham, Reading RG4 8ND (GB)
(74) Representative: Gray, Peter John Bracey

(57) **Abstract**

A real-time video data gradation control which modifies each component of the video data as a function of at least one other component and outputs the modified components to drive a monitor.

## Description

The present invention relates to real-time gradation control of video sequences. There are many circumstances in which real-time gradation control would be desirable, for example in previewing digital movies.

A finished movie is generally shown to an audience on film projected using a traditional movie projector or by a large screen electronic projector. However, during the making of a movie, scenes are usually subjected to a series of edits, colour correction work and other procedures that are known in the art. This work is conveniently done using electronic systems, and hence the movie will be stored electronically whilst the editing and colour correction work is performed. Typically, a movie is only therefore transferred to film when it has been completed. However, it is often required to show parts or all of a movie when it is in its unfinished state to (for example) investors, producers and the like. When the movie is in its unfinished state it is typically shown on a computer monitor. Unfortunately, cathode ray tubes and other computer and video displays or electronic projection devices do not have the same transfer characteristics as film. It is therefore difficult to show how an unfinished movie would 'look' from a work-in-progress model. A particular problem is that the electronic systems and displays used for editing, colour correcting and compositing work cannot show the film with the same intended colorimetry of the finished product because of different gradation of the images from black to white. This leads to inconsistencies between the products shown from work in progress and those shown on movie or electronic projectors. These problems typically occur when dealing with colour displays where the RGB drives are not equal to each other and the colours of the red, green and blue phosphors do not match the dye colours of the film print or the light generated by a large screen projector. Thus it is not possible with existing systems for an editor to show a potential client/customer how a finished project may look from a work-in-progress model.

There are known solutions to the above problems for use in the printing industry. However these solutions are not applicable to the moving image industry because the process is too slow to work in real time. It is not possible, using the processes known from the printing industry to correct the gradation of a data stream relating to video images at full video rate.

In electronic graphic systems an image is represented by data defining a multiplicity of pixels that together form the image. Each pixel is defined by the data as a value which typically represents a colour in a colour space (RGB, CMY, YUV for example). The data is input to a monitor, such as a cathode ray tube or other display device, where it is converted into voltage signals which are used to drive the monitor.

Colour in electronic system displays is generally achieved by using the RGB system. This system uses the fact that red, green and blue can be combined in various proportions to obtain almost all colours in the visible spectrum. Greyscales in electronic imaging displays are produced by equal amplitude drive to the red, green and blue inputs of the display device. The gradation can be controlled by single dimensional look up tables which directly link an input value to an unique corrected output value. This technology is known and is built into many modern display driver systems.

A particular aim of the present invention is to provide a system whereby the colour components of video data can be manipulated in real-time to compensate for various characteristics of a range of different display devices.

According to a first aspect of the present invention there is provided a real-time gradation control wherein a video sequence may be shown on a monitor from a store after passing data from the store through a correcting device which modifies each component of the data as a function of at least one other component and outputs the modified components to drive the monitor.

Preferably the gradation control device modifies the components of the video data for each pixel.

Preferably, the at least one other component is used as an index in a look-up table of correction values. Only the most significant bits of the other component may be used as the index and the least significant bits are used to interpolate between the correction values.

An advantage of this technique is that it can be implemented at full video rate using commercially available hardware.

Where the data is input in a format which has no discrete brightness component, such as RGB, the data is converted to a representation which has such a discrete brightness component, such as HSL. HSL data comprises information to represent hue, saturation and luminance components of an image. It is preferred that each component can be corrected.

Advantageously, the correction process may use the value of either saturation or hue as a control value for modifying or correcting the other two values. Preferably the hue value is used as the control value. Thus using the control value it is possible to modify the drive to the monitor to provide an output that closely matches the colorimetry of the intended output medium at full video output rate. Thus the corrections to the gradation and colorimetry of the image occur in real-time.

In a particularly preferred embodiment the correction values are combined with the original data to produce data representing a corrected image.

The look-up table values may be set by an external computer program according to the display type.

The above and further features of the invention are set forth with particularity in the appended claims and, together with advantages thereof, will become clearer from consideration of the following detailed description of an exemplary embodiment of the present invention with reference to the accompanying drawings.

In the drawings:
Fig. 1 is a diagrammatical representation of real-time gradation control device between a monitor and electronic system;
Fig. 2 is a diagrammatical representation of real-time gradation control of the present invention;
Fig. 3 is another diagrammatical representation of real-time gradation control of the present invention; and
Fig. 4 shows a diagram of a two dimensional representation of a bilinear interpolator.

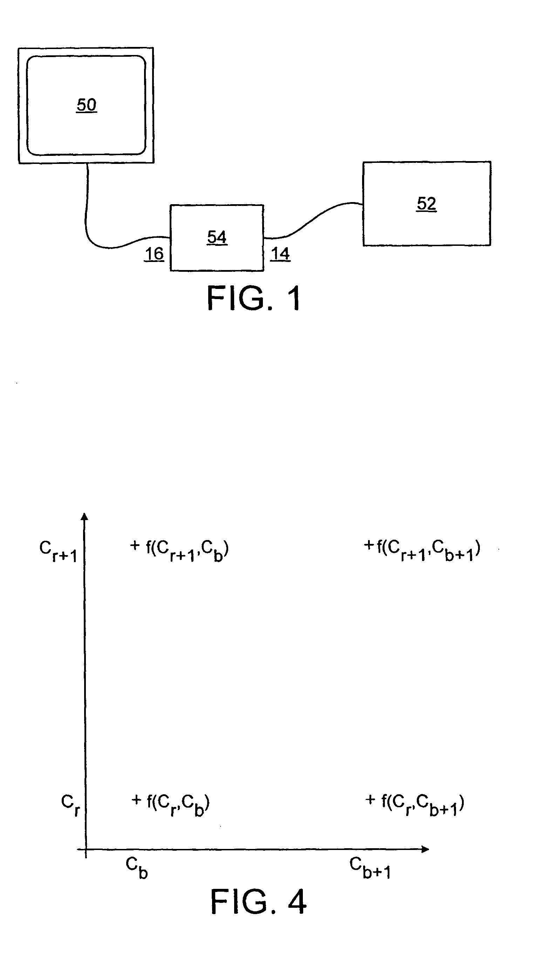

With reference to figure 1, a real-time gradation control device 54 is connected between a display 50 and a store 52 for storing video data. The real-time gradation control device 54 has an input 14 and an output 16. Video data from the store 52 is provided to the input 14 of the real-time gradation control device 54 and data from the output 16 is used to drive the display 50. The input 14 and output 16 may comprise an input port and an output port respectively that allow the gradation control device 54 to be connected to particular stores and displays.

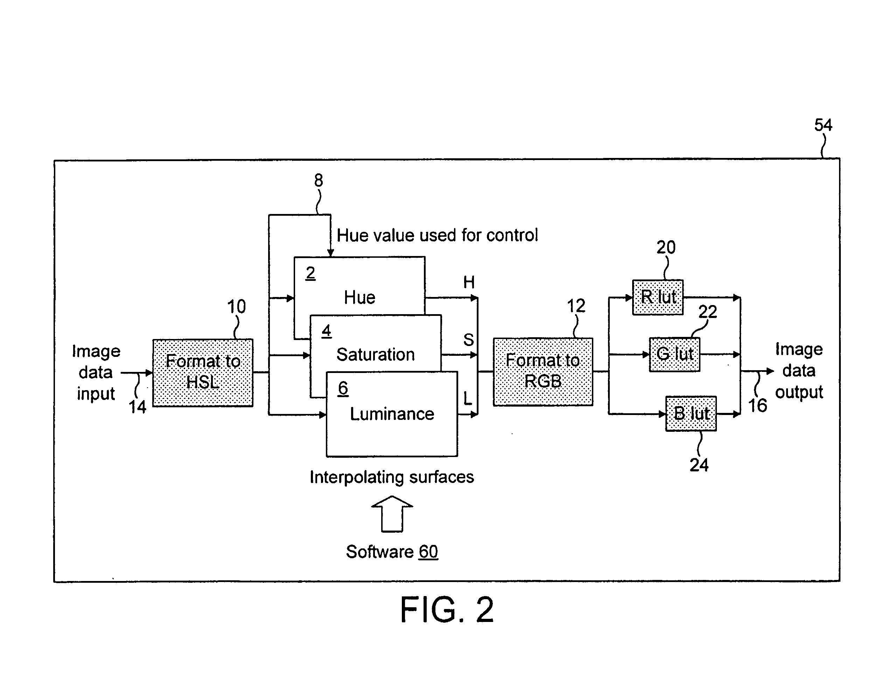

With reference to figure 2, in a first embodiment the real-time gradation control device 54 comprises a plurality of discrete component correction devices. More specifically, the real-time gradation control device 54 has a hue correction device 2 that accepts data relating to the hue (the colour) of the image, a saturation correction device 4 that accepts data relating to the saturation (the vividness of the hue, also called intensity) and a luminance correction device 6 that accepts data relating to the luminance of the image. Therefore, each of the components for hue, saturation and luminance can be corrected. In this example, the correction devices 2, 4, 6 are implemented by interpolators and look-up tables. The look-up tables are loaded by external software 60.

Each correction device implements a respective plurality of interpolating surfaces controlled by controlling data 8. The interpolating surfaces allow estimation of a value of a function from two known values of the function. Controlling data 8 relates to a component of the input video data which is used by the correction devices 2, 4, 6 to interpolate a corrected value.

An input format converter 10 is provided between the input 14 and the correction devices 2, 4, 6. This format converter 10 is capable of converting RGB (red, green, blue) data into HSL (hue, saturation, luminance) representation. An output format converter 12 is provided between the correction devices 2, 4, 6 and red, blue and green component adjusters 20, 22, 24. This format controller 12 is capable of converting a corrected HSL representation back into RGB data. The format converters are known *per se* and will not be described in further detail.

The red, green and blue component adjusters 20, 22, 24 are disposed after the output format converter 12 and adjust the value of each red, green and blue component independently of the others of the components. Each of the component adjusters 20, 22, 24 may be implemented by a look-up table.

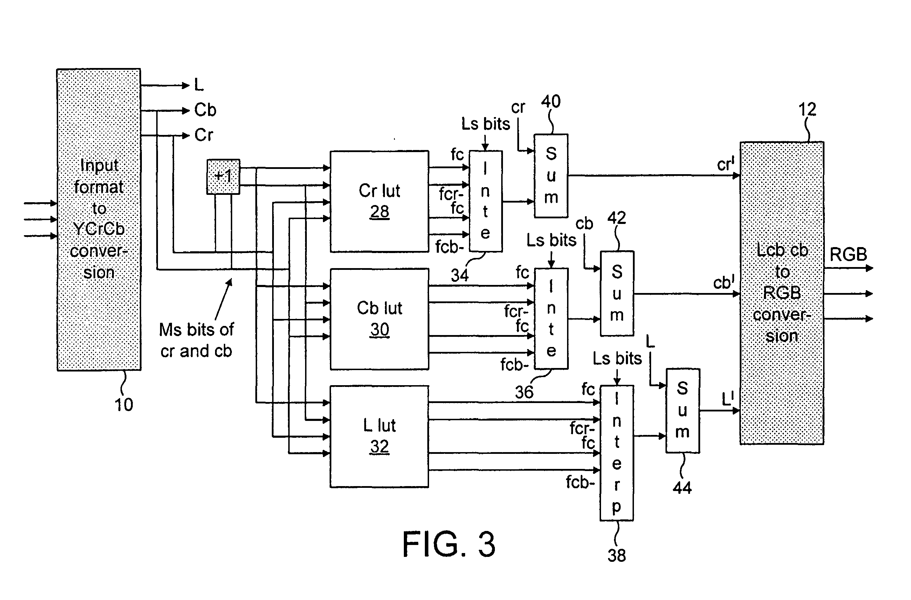

Referring to figure 3, in more detail the real-time gradation control device 54 uses Y, Cr and Cb to represent the HSL data. Y, Cr and Cb representation is often called Chrominance-Luminance representation. Cr relates to Chrominance red, and Cb relates to Chrominance blue, whilst Y denotes Luminance and hence is represented by reference L in this embodiment. The Chrominance of an image relates to the colour and is a combination of hue and saturation.

After the data has been formatted from RGB to YCrCb representation, the Cr and Cb data streams are split into their most and least significant bits. For each pixel, the most significant bits of the Cr and Cb data streams are used to address a plurality of two dimensional look-up tables 28, 30, 32, the outputs of which are used to generate correction factors for the respective L, Cr and Cb components of that pixel. The look-up tables 28, 30, 32 are each provided with four input values, cr, cr+1, cb and cb+1. These values relate to the most significant bits of the chrominance red and chrominance blue values of the input image and two additional values (cr+1 and cb+1) which are derived from the chrominance red and chrominance blue values of the input image. The additional values are obtained by increasing the value of the most significant parts of the chrominance red and chrominance blue values to the next highest value.

The two dimensional look up tables are addressed with four pairs of values from cr, cr+1, cb and cb+1 i.e. cr & cb, cr+1 & cb, cr & cb+1 and cr+1 & cb+1. The two dimensional look-up tables give a single output value for each pair. Together, the four output values from each look-up table 28, 30, 32 represent discrete values of a two dimensional function in a range in which the corrected data value lies. As shown in figure 4, the values may be represented as f(cr,cb), f(cr+1,cb), f(cr,cb+1 and f(cr+1,cb+1).

The least significant bits of the Cr and Cb components are used as weighting factors by respective bilinear interpolators 34, 36, 38 to generate a bilinear interpolated correction value for each component.

The interpolated correction values from the bilinear interpolators 34, 36, 38 are each fed into a respective adder 40, 42, 44, where they are added to the respective component of the original input to produce corrected components Cr', Cb' and L'. It is noted that the interpolated correction values may be positive, negative or zero.

Alternatively, the interpolated correction values may be absolute correction values which are not combined with the input components. However, this is less preferred as it gives decreased resolution to the corrected values.

In combination the Cr and Cb look-up tables 28, 30, produce a hue and saturation control providing for corrections to the colour and saturation of the output whilst the L look-up table 32 provides a hue and saturation sensitive brightness control.

The look-up tables 28, 30, 32 are loaded with appropriate values by external software to provide colour points relating to desired colours of a given image for a given type of display device 50.

The corrected components L', Cr' and Cb' are formatted back to RGB representation by the output format converter 12. This data comprises values for red, blue and green of an image. The data stream corresponding to each colour is passed through single dimensioned look-up tables 20, 22, 24 which control the gradation of the final image, as in the first embodiment.

The resultant data can be used to drive the display 50 to provide an output closely matching the colorimetry of the proposed output medium at full video rate. It is thus possible for an audience to view the video sequence with the intended gradation.

It will be appreciated that further variations to the above embodiment are possible. For example, if the video input is already in a format compatible with the correction devices and the display, then the format converters 10 and 12 are not required.

Further look-up tables can be provided if different image representation is used. For example if CYMK representation is used, a further additional look-up table and interpolator can be included.

The above embodiments are described in terms of functional blocks. These need not correspond to discrete hardware components. The embodiments may be implemented using software loaded onto a programmable computer or signal processor for example.

Should the input video data be analogue it will be appreciated that it would need to be digitally converted before correction. Likewise, if the display were to require an analogue input, digital to analogue conversion of the output video data would be required.

It is to be understood that the above described embodiment is for example only and that many modifications and variations are possible within the scope of the present invention.

## Claims

1. A gradation control device comprising means for receiving input video data comprising a plurality of discrete components, and means for correcting values of a first of said components in accordance with values of a second of said components to generate output video data.

2. A gradation control device as claimed in claim 1 wherein said second component is used to address a table or two dimensional surface of correction values for said first component.

3. A gradation control device as claimed in either claim 1 or 2 wherein a plurality of correction values is addressed, the device including an interpolator for deriving an interpolated correction value from said plurality of correction values.

4. A gradation control device as claimed in claim 2 or 3 wherein the most significant bits of the first component are used to address the table of correction values.

5. A gradation control device as claimed in either claim 3 or 4 wherein the least significant bits of the first component are used as a weighting factor by the interpolators.

6. A gradation control device as claimed in any preceding claim, wherein the second component is a colour component.

7. A gradation control device as claimed in any preceding claim, wherein the input video data is represented with a discrete luminance component and a number of discrete colour components, at least one of the colour components being used to correct one or more of the remaining components.

8. A gradation control device as claimed in any preceding claim, including an input format converter for converting the format of the input video data to a format comprising said plurality of discrete components.

9. A gradation control device as claimed in claim 8, wherein the input format converter is arranged to convert the input video data from a format which does not include a discrete luminance component.

10. A gradation control device as claimed in any preceding claim, including an output format converter for converting the output video data to a video display format.

11. A gradation control device as claimed in any preceding claim, including an output for outputting the output video data to a display.

12. A gradation control device as claimed in any preceding claim, wherein the at least one component corrector is arranged to calculate a component correction value and to combine the component correction value with the respective component of the input video data.

13. A gradation control device as claimed in any preceding claim wherein the frame rate of the input video data is substantially equal to that of the output video data.

14. A method of controlling the gradation of video data comprising receiving input video data comprising a plurality of discrete components, correcting values of a first component in accordance with values of a second of said components and using the corrected values of the first component to generate output video data.

15. A method of controlling the gradation of video data as claimed in claim 14 wherein the second component is used to address a table or two-dimensional surface of correction values for the first component.

16. A method of controlling the gradation of video data as either claim 14 or 15 including addressing a plurality of correction values and interpolating a correction value from the plurality of correction values.

17. A method of controlling the gradation of video data as claimed in any of claims 14 to 16 wherein the table of correction values is addressed by the most significant bits of the first component.

18. A method of controlling the gradation of video data as claimed in any of claims 14 to 17 such that when interpolating the corrected value the least significant bits of the first component are used as a weighting factor.

19. A method of controlling the gradation of video data as claimed in any of claims 14 to 18 wherein the second component is a colour component.

20. A method of controlling the gradation of video data as claimed in any of claims 14 to 19 wherein the input video data is represented by a discrete luminance component and a number of discrete colour components, at least one of the colour components being used to correct one or more of the remaining components.

21. A method of controlling the gradation of video data as claimed in any of claims 14 to 20 wherein the input is formatted to a format comprising a plurality of discrete components.

22. A method of controlling the gradation of video data as claimed in claim 21 wherein the input video data is converted from a format that does not include a discrete luminance component.

23. A method of controlling the gradation of video data as claimed in any of claims 14 to 22 wherein the output data is formatted to a video display format.

24. A method of controlling the gradation of video data as claimed in any of claims 14 to 23 wherein the output video data is sent to a display.

25. A method of controlling the gradation of video data as claimed in any of claims 14 to 24 wherein a correction value is calculated for a component and the correction value is combined with the respective component of the input video data.

26. A method of controlling the gradation of video data as claimed in any of claims 14 to 25 wherein a colour component of the video data is used to correct one or more of the remaining components.

27. A method of controlling the gradation of video data as claimed in any of claims 14 to 26 wherein rate of input of the video data is substantially equal to that of the output video rate.

28. Apparatus arranged to perform the method of any one of claims 14 to 27.

29. A computer program arranged to perform the method of any one of claims 14 to 27.

30. A gradation control device as herein described with reference to the accompanying drawings.
